Europäisches Patentamt

European Patent Office

Office européen des brevets

(19)

(11) Numéro de publication : **0 021 866 B1**

## (12) FASCICULE DE BREVET EUROPÉEN

(45) Date de publication du fascicule du brevet :
**28.12.83**

(21) Numéro de dépôt : **80400588.2**

(22) Date de dépôt : **29.04.80**

(51) Int. Cl.³ : **H 01 Q 19/195**, G 01 S  7/36,
G 01 S 13/44

(54) **Dispositif réducteur de brouillage en polarisation rectiligne tournante et son utilisation dans un radar.**

(30) Priorité : **13.06.79 FR 7915139**

(43) Date de publication de la demande :
**07.01.81 Bulletin 81/01**

(45) Mention de la délivrance du brevet :
**28.12.83 Bulletin 83/52**

(84) Etats contractants désignés :
**CH DE GB IT LI NL**

(56) Documents cités :
**FR-A- 1 508 062**
**US-A- 2 736 895**
**US-A- 3 137 000**
**US-A- 3 161 879**
**US-A- 3 218 643**
**US-A- 3 514 779**
**"Les antennes", L. Thourel, page 300, Dunod 1971**

(73) Titulaire : **THOMSON-CSF**
**173, Boulevard Haussmann**
**F-75379 Paris Cedex 08 (FR)**

(72) Inventeur : **Salvat, François**
**"THOMSON-CSF" SCPI - 173, Bld. Haussmann**
**F-75360 Paris Cedex 08 (FR)**
Inventeur : **Bouko, Jean**
**"THOMSON-CSF" SCPI - 173, Bld. Haussmann**
**F-75360 Paris Cedex 08 (FR)**
Inventeur : **Le Foll, Jean**
**"THOMSON-CSF" SCPI - 173, Bld. Haussmann**
**F-75360 Paris Cedex 08 (FR)**

(74) Mandataire : **Benoit, Monique et al**
**THOMSON-CSF SCPI 173, Bld Haussmann**
**F-75379 Paris Cedex 08 (FR)**

Jouve, 18, rue St-Denis, 75001 Paris, France

## Dispositif réducteur de brouillage en polarisation rectiligne tournante et son utilisation dans un radar

La présente invention est relative à un dispositif réducteur de brouillage en polarisation rectiligne tournante, comportant une antenne du type Cassegrain à rotation de polarisation, plus particulièrement associée à un radar de poursuite et d'écartométrie. Le dispositif selon l'invention est tel qu'il conserve une courbe d'écartométrie, ayant toujours une fente de même sens quelle que soit la direction de la polarisation rectiligne de l'écho.

Un radar de poursuite et d'écartométrie, c'est-à-dire déterminant l'écart angulaire en position de la cible par rapport à la ligne de visée de l'antenne, et comportant une antenne du type Cassegrain à rotation de polarisation présente un diagramme de rayonnement en polarisation rectiligne, perpendiculaire à la direction de polarisation de l'onde émise par la source illuminant l'antenne. L'écho de peau renvoyé par la cible, tout comme le signal envoyé par un brouilleur dont peut être équipée la cible, pouvant avoir une direction de polarisation quelconque, le radar de poursuite peut ne plus percevoir avec précision la cible. Surtout lorsque la direction de polarisation du signal reçu est sensiblement voisine de la polarisation normale de fonctionnement de l'antenne, comme ce peut être le cas avec un brouilleur à polarisation rectiligne tournante.

L'objet de l'invention est un dispositif réducteur de brouillage en polarisation rectiligne tournante comportant une antenne Cassegrain à rotation de polarisation permettant d'éviter les inconvénients précités.

Suivant l'invention, l'antenne du type Cassegrain permettant la réduction de brouillage en polarisation rectiligne tournante comprenant un réflecteur parabolique et un réflecteur auxiliaire à périmètres circulaires de rayons extérieurs illuminés par une source en polarisation rectiligne, le réflecteur parabolique étant constitué par un miroir et un réseau de fils à rotation de polarisation, est caractérisée en ce que la distance entre le miroir et le réseau de fils est inférieure au quart de la longueur d'onde à la fréquence centrale de la bande de fonctionnement et en ce que le rapport entre les deux rayons extérieurs est déterminé pour permettre le rayonnement simultané de l'antenne selon un diagramme en polarisation rectiligne à travers la pupille de sortie du réflecteur auxiliaire et selon un diagramme en polarisation elliptique à travers la couronne située autour du réflecteur auxiliaire le niveau de l'onde émise en polarisation elliptique étant inférieur de − 15 à − 20 dB au niveau de l'onde émise en polarisation rectiligne.

On a constaté qu'une antenne du type Cassegrain à rotation de polarisation rayonne, en plus du diagramme en polarisation rectiligne perpendiculaire à la direction de polarisation de l'onde émise par la source, un diagramme en polarisation elliptique, comme cela est indiqué dans le brevet américain US-A-3 161 879. Cette propriété permet d'obtenir une courbe d'écartométrie de même sens que celle obtenue en polarisation normale, quelque soit l'angle de la polarisation rectiligne émise par le brouilleur ; elle est mise à profit dans l'antenne selon l'invention qui se caractérise par une réduction de l'effet d'un brouilleur en polarisation rectiligne tournante.

D'autres avantages et caractéristiques de l'invention apparaîtront dans la description qui suit, illustrée par les figures suivantes :

la figure 1 une vue de profil de l'antenne suivant l'invention ;

la figure 2 une vue de face d'une telle antenne ;

la figure 3 la décomposition du vecteur champ électrique au niveau du réseau de fils du réflecteur principal.

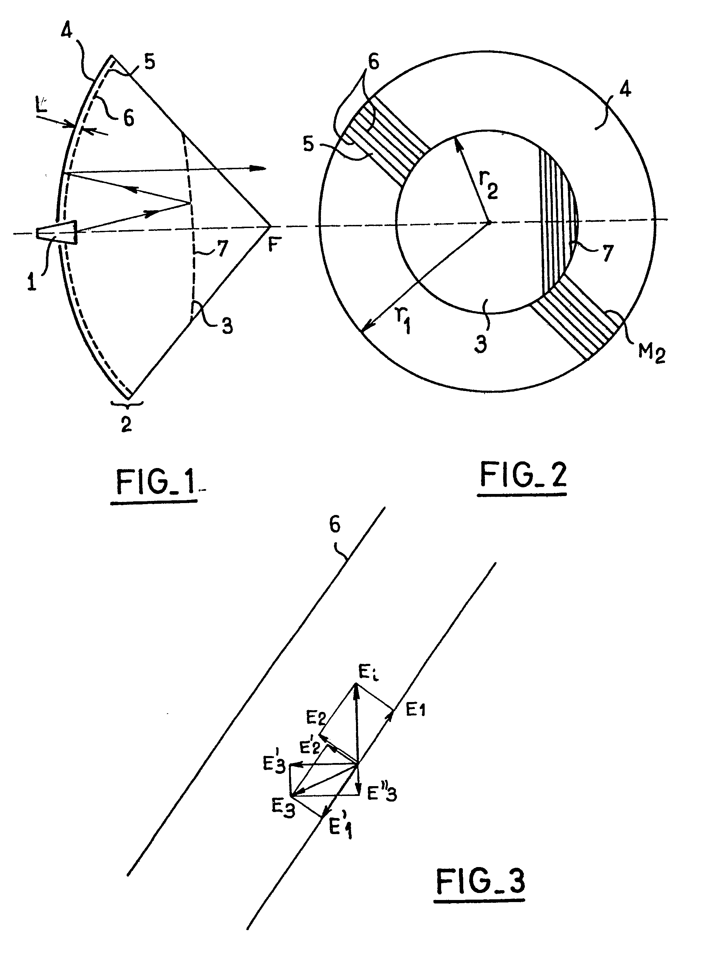

L'antenne Cassegrain permettant la réduction de brouillage selon l'invention représentée sur la figure 1, comprend une source 1 d'ondes électromagnétiques à polarisation rectiligne qui éclaire un réflecteur principal parabolique 2, et un réflecteur secondaire 3 constitué par un hyperboloïde, dont un des foyers est au centre de phase du réflecteur principal 2 et l'autre est au foyer F de ce dernier. Le réflecteur secondaire 3 peut aussi être un paraboloïde de foyer situé au centre de phase du réflecteur 2, ou un plan tel que l'image de la source 1 se trouve au centre de phase du réflecteur 2, et de diamètre extérieur $r_2$ inférieur à celui $r_1$ du réflecteur principal 2. La direction de la polarisation de la source 1 est supposée horizontale dans un exemple de réalisation non limitatif. Le réflecteur principal 2 est formé d'un miroir parabolique réflecteur 4 et d'un réseau 5 homofocal de fils métalliques 6 parallèles placé à une distance L déterminée de ce dernier. La direction des fils 6 fait un angle de 45° avec la direction de la polarisation de la source 1 et la distance L entre le miroir 4 et le réseau 5 est choisie de manière à ce que la polarisation du champ réfléchi soit elliptique Voir « Les antennes » de L. THOUREL, page 300, ed. DUNOD 1971. Le réflecteur auxiliaire 3 est formé par un réseau de fils 7, métalliques parallèles à la direction de polarisation de l'onde émise par la source 1. Le diamètre et l'écartement des fils 7 sont convenablement choisis pour que le réseau soit réflecteur pour la polarisation de l'onde émise par la source 1 et transparent pour une polarisation perpendiculaire. Les fils 6 et 7 peuvent être remplacés par des fibres de verre porteuses de fils métalliques guipés. Ce peut être également des lamelles métalliques.

La figure 2 montre une vue de face de l'antenne selon l'invention, mettant en évidence la couronne extérieure aux fils 7.

Comme le montre la figure 3, dans le plan du réseau 5 de fils 6, l'onde incidente $E_i$ issue de la source 1 puis réfléchie par le réseau de fils 7 peut être décomposée suivant deux directions orthogonales, une première composante $E_1$ étant

parallèle aux fils 6 et une seconde composante $E_2$ leur étant perpendiculaire. $E_1$ se réfléchit sur les fils 6 avec un changement de phase de 180° donnant la composante $E_1' \cdot E_2$ traverse le réseau 5 et se réfléchit avec un changement de phase de 180° sur le miroir 4. Le déphasage total subi par $E_2$ est égal au déphasage de 180° dû à la réflexion sur le miroir 4 ajouté au déphasage correspondant au trajet aller-retour entre le miroir 4 et le réseau 5.

Dans une antenne Cassegrain à rotation de polarisation classique, le trajet aller-retour est égal à λ/2 provoquant un déphasage de 360°. Dans l'antenne objet de l'invention, le déphasage correspondant au trajet aller-retour est sensiblement différent de 360° ; la projection dans le plan du réseau 5 de fils 6 de la composante $E_2$ réfléchie par le miroir 4 est notée $E_2'$ sur la figure. Composée avec $E_1'$, cette composante $E_2'$ donne une résultante $E_3$. Ce vecteur $E_3$ peut à son tour être décomposé en un vecteur $E_3'$ perpendiculaire à $E_i$ et en un vecteur $E_3''$ parallèle à $E_i$.

Après cette réflexion sur le réflecteur principal 2, l'onde dont la direction de polarisation est celle du vecteur $E_3$ rencontre, pour une partie, le réseau réflecteur 3. La composante $E_3''$ parallèle aux fils 7 est réfléchie mais la composante $E_3'$ perpendiculaire aux fils 7 passe à travers le réseau. A la sortie du réflecteur 3, l'onde rayonnée est polarisée rectilignement suivant une direction perpendiculaire à celle de l'onde émise par la source 1, alors que sur la couronne extérieure au réflecteur 3, l'onde rayonnée par l'antenne est polarisée elliptiquement. On peut montrer que la perte en puissance par rapport à la polarisation normale est égale à :

$$1 - 1/1 + T^2$$

T étant le taux d'ellipticité ($T = \text{tg } \varphi/2$) avec $\varphi$ déphasage différentiel entre le déphasage subi par $E_2'$ dans une antenne Cassegrain à rotation de polarisation classique (soit 360°) et le déphasage subi par $E_2'$ dans l'invention.

La distance L séparant le miroir 4 du réseau 5 de fils 6 ainsi que le rapport des deux diamètres extérieurs des deux réflecteurs sont déterminés de telle sorte que le rapport entre l'énergie de l'onde rayonnée par l'antenne en polarisation perpendiculaire à l'onde émise par la source et l'énergie de l'onde rayonnée en polarisation parallèle à celle de l'onde émise est voisin de 15 db — compris entre 15 et 20 db —.

Le diagramme en polarisation elliptique rayonné par la couronne extérieure aux fils a alors une ouverture à mi-puissance inférieure d'environ 20 % à celle du diagramme principal.

Le dispositif, objet de l'invention, rayonne suivant un diagramme en polarisation rectiligne auquel se surperpose un diagramme en polarisation elliptique de niveau inférieur d'environ − 15 à − 20 db au précédent.

Dans le cas d'un radar de poursuite monopulse, le dispositif suivant l'invention permet, quelle que soit la polarisation du signal reçu, d'avoir toujours un signal reçu en voie somme. Dans le cas d'un radar monopulse, il faut éviter d'avoir un signal nul en voie somme car la démodulation se fait en utilisant la voie somme comme référence.

## Revendications

1. Antenne Cassegrain à rotation de polarisation permettant la réduction de brouillage en polarisation rectiligne tournante comprenant un réflecteur parabolique principal (2) et un réflecteur auxiliaire (3) à périmètres circulaires de rayons extérieurs ($r_1$, $r_2$) illuminés par une source (1) en polarisation rectiligne, le réflecteur parabolique (2) étant constitué par un miroir (4) et un réseau de fils (5) à rotation de polarisation, caractérisée en ce que la distance (L) entre le miroir (4) et le réseau de fils (5) est inférieure au quart de la longueur d'onde à la fréquence centrale de la bande de fonctionnement et en ce que le rapport entre les deux rayons extérieurs ($r_1$, $r_2$) est déterminé pour permettre le rayonnement simultané de l'antenne selon un diagramme en polarisation rectiligne à travers la pupille de sortie du réflecteur auxiliaire (3) et selon un diagramme en polarisation elliptique à travers la couronne située autour du réflecteur auxiliaire (3), le niveau de l'onde émise en polarisation elliptique étant inférieur de − 15 à − 20 db au niveau de l'onde émise en polarisation rectiligne.

2. Antenne selon la revendication 1, caractérisé en ce que le miroir réflecteur (4) et le réseau (5) de fils parallèles constituant le réflecteur principal (2) sont homofocaux.

3. Antenne selon la revendication 1, caractérisé en ce que le réflecteur auxiliaire (3) est parabolique de foyer confondu avec le centre de phase du réflecteur principal (2).

4. Antenne selon la revendication 1, caractérisé en ce que le réflecteur auxiliaire (3) est hyperbolique, dont un des foyers est confondu avec le centre de phase du réflecteur principal (2) et dont l'autre est confondu avec son foyer (F).

5. Antenne selon la revendication 1, caractérisé en ce que le réflecteur auxiliaire (3) est plan, de sorte que l'image de la source (1) soit située au centre de phase du réflecteur principal (2).

6. Antenne, selon la revendication 1, caractérisé en ce que les fils (6 et 7) sont soit des fibres de verre porteuses de fils métalliques guipés, soit des fils métalliques.

7. Antenne selon la revendication 1, caractérisé en ce que les fils (6 et 7) sont des lamelles métalliques.

8. Utilisation de l'antenne selon l'une des revendications 1 à 8, dans un radar de poursuite et d'écartométrie.

## Claims

1. Cassegrain-type antenna for use in the reduction of the jamming with rotating rectilinear polarisation, this antenna comprising a main circular parabolic reflector (2) with an outer radius ($r_1$) and an auxiliary circular reflector with an outer radius ($r_2$), these reflectors being illuminated by a source (1) at rectilinear polarisation, the parabolic reflector (2) being formed from a mirror (4) and from a wire network with rotating polarisation, characterized in that the distance (L) between the mirror (4) and the wire network (5) is less than a quarter of a wavelength at the central frequency of the operating band and that the ratio between the two outer radii ($r_1$, $r_2$) is chosen such that the antenna is able to radiate simultaneously according to a rectilinear polarisation diagram through the output aperture of the auxiliary reflector (3) and according to an elliptical polarisation diagram through the ring-shaped surface situated around the auxiliary reflector (3), the level of the wave emitted according to the elliptical polarisation being by − 15 to − 20 dB lower than the level of the wave emitted according to the rectilinear polarisation.

2. An antenna according to claim 1, characterized in that the reflecting mirror (4) and the network (5) of parallel wires constituting the main reflector (2) have the same focal point.

3. An antenna according to claim 1, characterized in that the auxiliary reflector (3) is a parabolic reflector, the focal point of which coincides with the phase center of the main reflector (2).

4. An antenna according to claim 1, characterized in that the auxiliary reflector (3) is a hyperbolic reflector, one of the focal points of which coincides with the phase center of the main reflector (2) whereas the other coincides with its focal point (F).

5. An antenna according to claim 1, characterized in that the auxiliary reflector (3) is a flat reflector such that the image of the source (1) is situated at the phase center of the main reflector (2).

6. An antenna according to claim 1, characterized in that the wires (6 and 7) are either glass fibres carrying wrapped metal wires, or metal wires.

7. An antenna according to claim 1, characterized in that the wires (6 and 7) are metal strips.

8. The use of the antenna according to one of the claims 1 to 7, in a tracking and distance measuring radar.

**Ansprüche**

1. Cassegrain-Antenne mit drehender Polarisation für die Unterdrückung von Störungen in der drehenden linearen Polarisation, mit einem runden Hauptparabolreflektor (2) eines Außenradius $r_1$ und mit einem runden Hilfsreflektor (3) eines Außenradius $r_2$, die von einer linear polarisierten Quelle (1) bestrahlt werden, wobei der Parabolreflektor (2) aus einem Spiegel (4) und einem Fadennetz (5) mit drehender Polarisation besteht, dadurch gekennzeichnet, daß der Abstand (L) zwischen dem Spiegel (4) und dem Fadennetz (5) kleiner als eine Viertelwellenlänge bei der Mittenfrequenz des Betriebsfrequenzbands ist und daß das Verhältnis zwischen den beiden Außenradien ($r_1$, $r_2$) so festgelegt ist, daß die gleichzeitige Abstrahlung der Antenne gemäß einem bei linearer Polarisation durch die Ausgangspupille des Hilfsreflektors (3) gültigen Diagramm und gemäß einem bei elliptischer Polarisation durch die den Hilfsreflektor (3) umgebende Ringfläche gültigen Diagramm ermöglicht wird, wobei der Pegel der mit elliptischer Polarisation emittierten Welle um − 15 bis − 20 dB niedriger ist als der Pegel, der mit linearer Polarisation emittierten Welle.

2. Antenne nach Anspruch 1, dadurch gekennzeichnet, daß der reflektierende Spiegel (4) und das Netz (5) paralleler Fäden, die zusammen den Hauptreflektor (2) ergeben, gleichen Brennpunkt besitzen.

3. Antenne nach Anspruch 1, dadurch gekennzeichnet, daß der Hilfsreflektor (3) Parabolform mit einem Brennpunkt besitzt, der mit dem Phasenzentrum des Hauptreflektors (2) zusammenfällt.

4. Antenne nach Anspruch 1, dadurch gekennzeichnet, daß der Hilfsreflektor (3) Hyperbelform besitzt, wobei einer der Brennpunkte mit dem Phasenzentrum des Hauptreflektors (2) zusammenfällt, während der andere mit dem Brennpunkt (F) des Hauptreflektors zusammenfällt.

5. Antenne nach Anspruch 1, dadurch gekennzeichnet, daß der Hilfsreflektor (3) ebene Form besitzt, derart, daß das Bild der Quelle (1) im Phasenzentrum des Hauptreflektors (2) liegt.

6. Antenne nach Anspruch 1, dadurch gekennzeichnet, daß die Fäden (6 und 7) entweder Glasfasern sind, die mit Metalldrähten umsponnen sind, oder Metalldrähte.

7. Antenne nach Anspruch 1, dadurch gekennzeichnet, daß die Fäden (6 und 7) metallische Lamellen sind.

8. Verwendung der Antenne nach einem der Ansprüche 1 bis 7 in einem Radar zur Zielverfolgung und zur Entfernungsmessung.

FIG_1

FIG_2

FIG_3